# FASCICULE DE BREVET EUROPEEN

(11) **EP 3 823 831 B1**
(45) Date de publication et mention de la délivrance du brevet: **28.08.2024**
(21) Numéro de dépôt: 19753167.6
(22) Date de dépôt: 16.07.2019
(51) Int. Cl.: B32B 37/14, B32B 3/12, F02K 1/82, G10K 11/168, G10K 11/172, C04B 35/18, B64D 33/04

(54) **PROCEDE DE FABRICATION D'UN PANNEAU ACOUSTIQUE**
VERFAHREN ZUR HERSTELLUNG EINER AKUSTIKPLATTE
METHOD FOR MANUFACTURING AN ACOUSTIC PANEL

(30) Priorité: 17.07.2018 FR 1856607
(43) Date de publication de la demande: 26.05.2021
(73) Titulaire: Safran Ceramics, 33185 Le Haillan (FR)
(72) Inventeur: CLERAMBOURG, Aurélia, 77550 MOISSY-CRAMAYEL (FR); BOUILLON, Eric, 77550 MOISSY-CRAMAYEL (FR); PHILIPPE, Eric, 77550 MOISSY-CRAMAYEL (FR)
(74) Mandataire: Ernest Gutmann - Yves Plasseraud S.A.S.
(86) Numéro de dépôt international: PCT/FR2019/051782
(87) Numéro de publication internationale: WO 2020/016520

(56) Documents cités:
- FR-A1- 2 701 665
- FR-A1- 2 701 665
- FR-A1- 3 044 963
- FR-A1- 3 044 963
- US-A1- 2009 263 627
- US-A1- 2009 263 627

## Description

### DOMAINE

La présente invention concerne le domaine des panneaux, notamment destinés à équiper les zones chaudes d'éjection des gaz d'une turbomachine, et plus précisément d'un turboréacteur d'aéronef. L'invention concerne plus spécifiquement un procédé de fabrication d'une âme alvéolaire.

### CONTEXTE

Classiquement, une turbomachine comporte des surfaces de guidage aérodynamiques de l'écoulement des gaz chauds éjectés, qui peuvent être soumises à des températures élevées pouvant dépasser 700°C, et atteindre dans certains cas 800°C

Pour réduire les bruits émis par le turboréacteur en fonctionnement, il est connu de réaliser des surfaces de guidage aérodynamiques avec des panneaux acoustiques 10 comportant une structure du type sandwich composée d'une âme alvéolaire 12 intercalée entre deux parois de recouvrement encore appelées des peaux 14. Les peaux 14 de ces panneaux 10 sont réalisées en matériaux métalliques ou composites à matrice céramique. L'âme alvéolaire 12 est réalisée en matériaux métalliques, monolithiques sous la forme de poudre compactée ou matériaux composites à matrice céramique munis de fibres courtes. Ainsi, dans le cas d'une âme métallique (alliages de Titane, Nickel, Inconel, etc.) ou monolithique, l'âme 12 est dépourvue de fibres de renforcement. Dans les cas où l'âme est réalisée en matériaux composites à matrice céramique, le matériau composite est muni de fibres courtes.

Les panneaux sont habituellement réalisés en alliage de titane. Si celui-ci intègre un traitement acoustique, qui est généralement réalisé par une structure de type résonateur d'Helmholtz, à savoir introduction entre deux peaux 14, d'une âme alvéolaire 12 sur la base de feuillards en titane formant les cloisons transversales 16 de l'alvéole 18. L'âme alvéolaire 12 est généralement brasée aux deux peaux 14. Les caractéristiques structurantes de l'âme alvéolaire 12 (tailles des alvéoles 18, épaisseur des parois 16, hauteur des parois 16) sont définies de sorte à optimiser l'atténuation acoustique.

L'accroissement potentiel de température d'éjection des gaz, pour les futurs moteurs d'aéronef risque de rendre limite l'utilisation d'un matériau tel que du Titane. Ainsi, un matériau résistant à plus haute température doit être identifié. La solution de l'état de l'art est de basculer sur un alliage à base de Nickel, qui présente une limite de tenue en température bien plus élevée que celle du Titane.

Cependant, l'usage d'un alliage à base de Nickel implique un accroissement significatif de la masse par rapport à un panneau en alliage à base de Titane. En outre, la réalisation d'un panneau en alliage à base de Nickel est plus complexe qu'un panneau en alliage à base de Titane.

L'âme alvéolaire 12 comporte des cloisons 16 transversales formant un grand nombre d'alvéoles 18, qui peuvent présenter en particulier une section transverse rectangulaire ou avoir une forme en nid d'abeille avec une section hexagonale.

Enfin les panneaux comprenant une âme alvéolaire 12 en matériaux composite munies de fibres courtes ont une faible résistance mécanique.

De plus, les matériaux métalliques constitutifs des panneaux 10 présentent des limitations en température qui peuvent être atteintes en fonctionnement et présentent une épaisseur et une masse importantes. L'oxydation provoque une dégradation chimique des matériaux métalliques.

Des matériaux composites à matrice céramique à base de carbure de silicium, tel que le Cerasep^{®}, sont fonctionnels dans un environnement pouvant atteindre des températures jusqu'à 1000°C. Ces matériaux permettent ainsi de satisfaire les exigences liées aux contraintes des zones chaudes d'éjection des gaz au niveau corps arrière de la turbomachine. Toutefois, l'usage de tels matériaux pour la réalisation de panneaux acoustiques 10 n'est pas considéré puisque le coût de réalisation d'un panneau 10 serait prohibitif.

US2009/263627 décrit notamment une structure qui comprend une feuille supérieure et une feuille inférieure. Une tôle ondulée est intercalée entre lesdites feuilles supérieure et inférieure. La structure ainsi réalisée forme un panneau acoustique.

L'invention vise à réaliser un panneau acoustique 10 en un matériau permettant de surmonter les problèmes mentionnés précédemment et ceci à un coût moindre.

### RESUME DE L'INVENTION

La présente invention concerne tout d'abord un procédé de fabrication d'un panneau composite, en particulier dans une turbomachine, le procédé est caractérisé en ce qu'il comprend les étapes suivantes :
a) réaliser une première paroi, une deuxième paroi, une troisième paroi et une quatrième paroi en matériaux composites comprenant une matrice oxyde et des fibres longues oxydes,
b) à partir des première et seconde parois, réaliser une âme alvéolaire comportant une pluralité d'alvéoles, chaque alvéole comprenant une première extrémité et une seconde extrémité opposée,
c) recouvrir lesdites premières et secondes extrémités des alvéoles de ladite âme alvéolaire avec ladite troisième paroi et ladite quatrième paroi, respectivement, de manière à fermer les extrémités desdites alvéoles.

Les panneaux réalisés intégralement en matériaux composites ayant une matrice oxyde et des fibres longues oxydes présentent une meilleure résistance mécanique à des températures supérieures à 700°C qu'un même panneau réalisé en alliage à base de Titane et une masse inférieure à un même panneau réalisé en alliage à base de Nickel. De la même manière, les panneaux comprenant une âme alvéolaire comportant des fibres courtes a une plus faible tenue mécanique que des panneaux dont l'âme alvéolaire comporte des fibres longues.

Les fibres longues seront distinguées des fibres courtes par leur capacité à former une préforme textile à l'aide de fibres unidirectionnelles ou biaxiales. Par opposition aux fibres longues, les fibres courtes ne permettent pas la fabrication de telles préformes de textiles. Dans le cas de la présente invention, les fibres dites longues font plusieurs kilomètres de longueur.

Les panneaux comprennent une âme alvéolaire recouverte par une troisième paroi et une quatrième paroi, encore appelées peau inférieure et peau supérieure, de manière à obturer les ouvertures débouchantes des alvéoles. Lorsque le panneau acoustique selon l'invention est intégré à un carter d'échappement d'une turbomachine, la vapeur d'eau présente n'impacte pas la structure du panneau puisque la matrice oxyde et les fibres oxydes ne sont pas sensibles à l'oxydation. Ainsi, la durée de vie des panneaux en matériaux composites comportant une matrice oxyde et des fibres longues oxydes est augmentée.

Le panneau concerné pourrait être un panneau acoustique destiné à réduire les nuisances sonores. Dans ce cas, au moins l'une de la troisième paroi et la quatrième paroi comprend des perforations, chacune des perforations débouchant dans une alvéole. Chaque perforation débouche dans une alvéole et forme ainsi un résonateur d'Helmholtz.

L'âme alvéolaire est obtenue à l'étape b) à partir des étapes suivantes :
i.réaliser un formage de la première paroi de manière à obtenir une paroi ondulée présentant une alternance de premières portions de sommet et de secondes portions de sommet reliées entre elles par des portions de liaison de sommet,
ii.découper des fentes dans lesdites premières portions de sommet et de portions de liaison de sommets de la première paroi,
iii.réaliser des découpes dans la deuxième paroi de manière à obtenir une pluralité de bandes,
iv.insérer lesdites bandes dans les fentes de la première paroi de manière à délimiter une pluralité d'alvéoles.

La première paroi est formée de manière à obtenir une tôle ondulée dont la succession de portions de sommet et de portion de liaison de sommets s'étend dans une direction axiale. Ce formage de la première paroi peut être obtenue par thermoformage ou par formage à l'aide d'une empreinte, lors de l'étape de réalisation de ladite première paroi. Avantageusement, les secondes portions de sommet ne comprennent pas de fentes, ce qui permet aux bandes de venir en butée sur lesdites secondes portions.

Les fentes sont découpées dans la tôle ondulée dans une direction sensiblement axiale, de manière à traverser les premières portions de sommet, les portions de liaison de sommets adjacentes desdites premières portions de sommet ainsi qu'une partie de l'extrémité aval de la tôle ondulée et la portion de liaison de sommets la reliant à une dite seconde portion de sommet de la tôle ondulée. Un tel formage de la première paroi permet d'avoir simplement à agencer des bandes, formant des cloisons, dans les fentes, de manière à venir en butées avec les secondes portions de sommet. L'agencement des bandes dans les fentes de la tôle ondulée forme des alvéoles définissant ensemble l'âme alvéolaire. Avantageusement, chaque alvéole de ce premier mode de réalisation est obturée, d'une part, par l'une des portions de sommet et, d'autre part, par les bandes et les portions de liaison de sommets, ainsi seule l'extrémité de l'alvéole opposée à la portion de sommet nécessite d'être obturée à l'aide d'une peau.

Avantageusement, le procédé peut comprendre une étape consistant à appliquer un adhésif, préférentiellement de la colle céramique, au niveau des zones de jonctions de la première paroi et des bandes.

Il est préférable d'appliquer un adhésif, tel que de la colle céramique, au niveau des jonctions de la tôle ondulée et des cloisons, formées par les bandes insérées dans les fentes de ladite tôle ondulée, de manière à rigidifier la structure de l'âme alvéolaire.

Dans un mode alternatif décrit par la présente divulgation, non compris dans la portée des revendications, l'âme alvéolaire est obtenue à partir des étapes suivantes :
i. découper la première paroi et la deuxième paroi sous forme de premières bandes et secondes bandes de même largeur, respectivement, comportant chacune un premier bord et un second bord sensiblement parallèles,
ii. dans lesdits premiers bords de chacune des premières bandes et des secondes bandes, réaliser des premières fentes parallèles et des secondes fentes parallèles, respectivement,
iii. réaliser l'âme alvéolaire par emboîtement desdites premières bandes dans les secondes fentes des secondes bandes et desdites secondes bandes dans les premières fentes des premières bandes, de manière à ce que les fonds des premières fentes soient en contact avec les fonds des secondes fentes.

L'emboitement des premières bandes et des secondes bandes au niveau des premières fentes et des secondes fentes, respectivement, permet la réalisation simple et rapide d'une âme alvéolaire. Ladite âme alvéolaire comprend des rangées d'alvéoles ayant une forme sensiblement rectangulaire ou carrée, et comportant au moins deux côtés opposés sensiblement parallèles et de même longueur. Optionnellement, les alvéoles, obtenues par emboîtement des premières bandes et secondes bandes, sont de formes sensiblement carrées et comprennent ainsi quatre côtés de longueur sensiblement égale et des côtés opposés sensiblement parallèles.

Dans une variante de réalisation, les premières bandes et les secondes bandes peuvent présenter une même largeur.

Avantageusement, la largeur des premières bandes, la largeur des secondes bandes et la profondeur des fentes sont dimensionnées de manière à ce que les premiers bords des premières bandes affleurent les seconds bords des secondes bandes et/ou les seconds bords des premières bandes affleurent les premiers bords des secondes bandes.

Le fait que tous les premiers bords des premières bandes affleurent les seconds bords des secondes bandes et/ou tous les seconds bords des premières bandes affleurent les premiers bords des secondes bandes facilite l'usinage nécessaire de la troisième paroi et/ou quatrième paroi destinée à former les peaux recouvrant de part et d'autre l'âme alvéolaire. De préférence, tous les premiers bords des premières bandes affleurent les seconds bords des secondes bandes et tous les seconds bords des premières bandes affleurent les premiers bords des secondes bandes, facilitant ainsi l'usinage de la troisième paroi et de la quatrième paroi constituant les peaux qui enferment l'âme alvéolaire.

Dans une réalisation pratique, les premières bandes et les secondes bandes ont une même largeur et les premières et secondes fentes de ces dites premières et secondes bandes, respectivement, s'étendent, à partir du premier bord, sur la moitié de la largeur desdites premières et secondes bandes. Ainsi, dans le cas préférentiel, où les fentes s'étendent dans une direction parallèle à celle de la largeur, les premiers bords des premières bandes affleurent les seconds bords des secondes bandes et tous les seconds bords des premières bandes affleurent les premiers bords des secondes bandes.

Avantageusement, le mode alternatif décrit dans la présente divulgation de réalisation du panneau acoustique composite peut comprendre une étape consistant à appliquer un adhésif, préférentiellement de la colle céramique, au niveau des zones de jonctions des premières bandes et des secondes bandes.

Il est préférable d'appliquer un adhésif au niveau des zones de jonctions des premières bandes et secondes bandes, de manière à rigidifier la structure de l'âme alvéolaire. Lorsque les premières bandes et secondes bandes sont emboîtées, l'adhésif peut être appliqué au niveau des intersections desdites premières bandes et secondes bandes. Optionnellement, l'adhésif est également appliqué au niveau des flancs et du fond de chacune desdites premières fentes et secondes fentes, avant l'emboitement des premières et secondes bandes.

De manière avantageuse, le procédé de fabrication du panneau acoustique composite peut comprendre une étape consistant à appliquer un adhésif, préférentiellement de la colle céramique, au niveau des zones de jonctions de l'âme alvéolaire avec au moins l'une de la troisième paroi et de la quatrième paroi. Ainsi, on réalise une solidarisation de la troisième paroi et de la quatrième paroi avec l'âme alvéolaire.

L'adhésif utilisé est préférentiellement une colle céramique ou une résine précéramique oxyde. La colle céramique peut être constituée de charges céramique oxydes (le plus souvent alumine) et d'un ensemble de liants fugitifs. La colle céramique peut également être constituée de charges céramiques et d'un liant de type polymère minérale (metaphosphate d'Aluminium) ou d'un sol ou sol-gel d'alumine, d'un sol de silice (Ludox). Enfin, la colle céramique peut être constituée d'un précurseur de céramique de la famille des polysiloxanes pouvant être chargées avec de l'alumine.

Le panneau acoustique composite obtenu est préférentiellement constitué de matériau composite comprenant une matrice oxyde et des fibres longues oxydes sous la forme d'une nappe de fibres biaxiales ou unidirectionnelles puisque leur coût, leur poids et leur épaisseur sont inférieurs à celui d'une armure tridimensionnelle.

Préférentiellement, les alvéoles de l'âme alvéolaire ont une forme rectangulaire ou carrée, et cela indépendamment du mode de réalisation choisi parmi les deux cités précédemment.

Selon un mode réalisation particulier, ladite au moins une parmi la première paroi, la deuxième paroi, la troisième paroi et la quatrième paroi est obtenue par thermoformage.

Selon un autre mode réalisation particulier, au moins l'une de la première paroi, la deuxième paroi, la troisième paroi et la quatrième paroi est obtenue par formage à l'aide d'une empreinte.

Préférentiellement, le procédé comprend au moins une étape de déliantage suivie d'une étape de frittage, lesdites étapes de déliantage et de frittage pouvant avoir lieu après l'une au moins des étapes suivantes :
- l'obtention de l'une des première, deuxième, troisième ou quatrième parois,
- la découpe de bandes,
- l'assemblages des bandes dans desdites fentes, et
- le collage de la troisième paroi (24) et de la quatrième paroi (26) sur l'âme alvéolaire (12).

Dans une réalisation particulière, le procédé comprend une étape de déliantage d'un premier liant de liaison des fibres ensemble. L'élimination de ce premier liant peut être réalisé dans une empreinte maintenue fermée et dans laquelle on introduit une barbotine comprenant une poudre d'alumine ou l'alumino-silicate ainsi qu'un second liant. L'introduction de barbotine peut être réalisée par injection ou infusion.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue en perspective d'un panneau acoustique pour turbomachine selon l'art antérieur;
- les figures 2a à 2d représentent les différentes étapes de réalisation d'un panneau acoustique selon l'invention;
- les figures 3a à 3e représentent les différentes étapes de réalisation d'un panneau acoustique selon un mode de réalisation alternatif, non compris dans la portée des revendications.

### DESCRIPTION DETAILLEE

Dans la description détaillée ci-après, le terme « fibres » désigne des « fibres longues oxydes ». Le terme « axial » désigne une direction axiale orientée sensiblement parallèlement à l'axe longitudinal de la turbomachine lorsque le panneau acoustique 10 selon l'invention est monté dans une turbomachine.

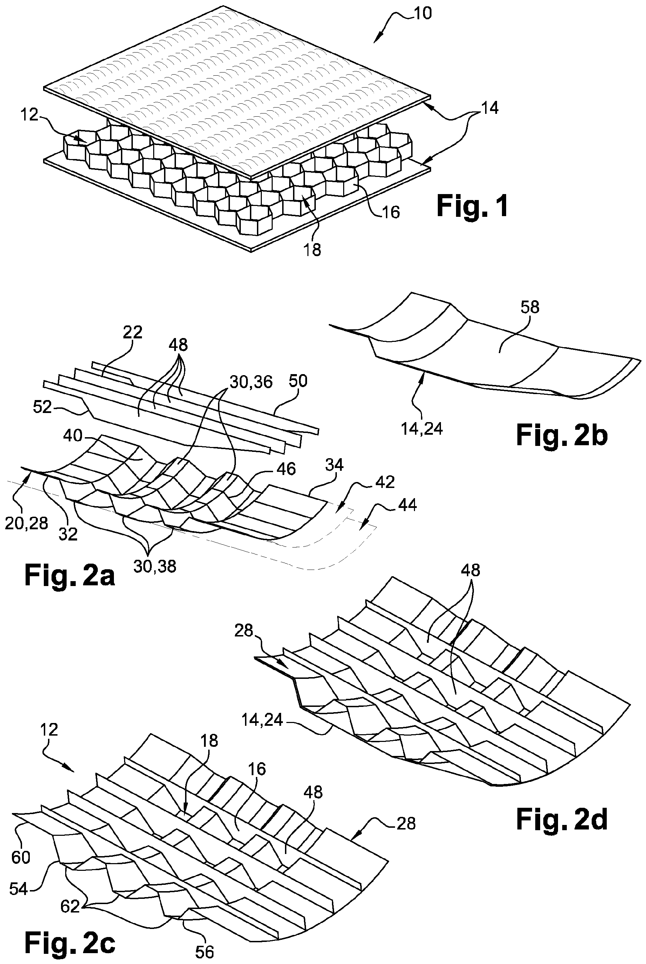

La figure 1 concerne un panneau acoustique 10 de l'art antérieur décrit précédemment.

On se réfère maintenant aux figures 2a à 2d, représentant le procédé d'obtention d'un panneau acoustique 10 en matériau composite à matrice céramique selon l'invention.

Les première, deuxième, troisième et quatrième parois 20, 22, 24, 26, composites sont obtenues respectivement à partir d'une nappe de fibres biaxiales ou d'une nappe de fibres unidirectionnelles.

Dans le cas de nappes de fibres biaxiales, la nappe est enduite d'une barbotine, de manière à ce que la barbotine pénètre dans les porosités de la nappe et forme ainsi une paroi composite. La barbotine est chargée de poudre d'alumine et d'un liant, le liant pouvant être un thermoplastique ou un thermodurcissable fugitif ou encore un thermodurcissable précéramique oxyde. Le liant permet que la nappe de fibres biaxiales enduite soit rigidifiée à la suite d'un traitement thermique. Suite à une enduction la nappe de fibres biaxiales est passée sous une presse ou une bâche à vide pour assurer la compaction et la pénétration de la barbotine dans la nappe de fibres. Si le liant utilisé est un liant fugitif, alors la nappe enduite subit un déliantage, sous la forme d'un traitement thermique, de manière à ce que le liant soit éliminé de la paroi. Un liant fugitif est destiné à être éliminé par un procédé de déliantage.

L'étape d'enduction d'une barbotine peut être remplacée par une étape d'infusion ou d'injection.

Dans le cas où la nappe est composée de fibres unidirectionnelles, les fibres unidirectionnelles sont liées les unes aux autres par l'intermédiaire d'un premier liant, appelé communément « binder », assurant une cohésion entre elles. La nappe de fibres unidirectionnelles est drapée directement dans l'empreinte ayant une forme voulue. Cette nappe de fibres unidirectionnelles subit un déliantage. Ce déliantage permet de créer des porosités. La barbotine est injectée sur les fibres unidirectionnelles, une fois que l'empreinte est fermée. La barbotine est injectée via un procédé STM (Slurry Transfer Molding) va se loger entre les fibres unidirectionnelles de la nappe de fibres unidirectionnelles. Ladite barbotine est chargée en une poudre d'alumine ou d'alumino-silicate et un liant thermoplastique, typiquement du PVA. L'alumine ou l'alumino-silicate de la barbotine forme la matrice oxyde du matériau composite et le thermoplastique assure la cohésion entre les fibres unidirectionnelles. Le liant de la barbotine sert à maintenir les grains de poudre d'alumine ou l'alumino-silicate entre-eux. Le liant permet d'éviter l'effritement de la poudre d'alumine ou l'alumino-silicate. et par conséquent une faible, voire une absence de tenue du matériau après injection. Ce liant sera ultérieurement éliminé en température pendant le frittage, les grains de poudre étant suffisamment solidaires pour assurer la tenue du matériau. Cette injection de barbotine permet également à la nappe de fibres unidirectionnelles de prendre la forme de l'empreinte. Ainsi, la paroi obtenue à la suite de l'injection présente directement la forme désirée.

En alternative, l'étape d'injection de barbotine peut être remplacée par une étape d'infusion.

Il est à noter que les nappes de fibres unidirectionnelles peuvent également être thermoformée, grâce au premier liant présent dans la nappe de fibres unidirectionnelles. Le premier liant est chauffé pour permettre à la nappe de fibres unidirectionnelles d'épouser la forme de l'empreinte. Une fois le thermoformage réalisé, le premier liant est éliminé par la circulation d'eau chaude dans l'empreinte fermée. Lorsque le premier liant est éliminé, l'empreinte est maintenue fermée et une barbotine comprenant une poudre d'alumine ou l'alumino-silicate et un liant est injectée sous pression sur la nappe de fibres unidirectionnelles.

Préférentiellement, les nappes de fibres unidirectionnelles présentent une épaisseur comprise entre 0,1 et 0,3 mm et les nappes de fibres biaxiales présentent une épaisseur comprise entre 0,3 et 0,6 mm.

La tôle ondulée 28, illustrée en figure 2a, 2c et 2d est obtenue à partir d'un formage selon l'un des procédés décrits précédemment, de la première paroi 20.

Optionnellement, les parois peuvent également être obtenues par thermoformage de nappes de fibres biaxiales préalablement enduites d'une barbotine injectée via un procédé STM ou par infusion. Le liant fugitif peut être remplacé par un liant précéramique type polysiloxane, préférentiellement chargé de poudre. Dans le cas où le liant est du type polysiloxane, on procède à un thermoformage de la nappe de fibres biaxiales enduites, puis à une pyrolyse pour transformer le polysiloxane en céramique oxyde.

Lorsque le panneau acoustique 10 est monté sur le carter de la turbomachine, la largeur de la paroi ondulée 28, autrement appelée tôle ondulée désigne la composante circonférentielle et la direction normale aux portions de sommet 30, et plus généralement à la tôle ondulée 28, désigne la direction radiale. La tôle ondulée 28 présente un profil courbé dans le sens de sa largeur, de manière à définir un secteur d'anneau. La tôle ondulée 28 comprend dans la direction axiale, entre ses extrémités axiales amont 32 et aval 34, une succession de premières et de secondes portions 36, 38 de sommet et de portions 40 de liaison de sommets dans une direction axiale. Chaque première portion 36 de sommet s'étend dans une direction sensiblement axiale, selon une surface cylindrique illustrée par la référence 42. Chaque seconde portion 38 de sommet s'étend dans une direction sensiblement axiale, selon une surface cylindrique illustrée par la référence 44. Les surfaces cylindriques 42, 44 sont sensiblement parallèles l'une à l'autre et ne sont donc pas confondues. Chaque portion 40 de liaison de sommets s'étend de manière à relier une première portion 36 de sommet à une seconde portion 38 de sommet.

Ainsi, en figure 2a, les premières portions 36 de sommets sont toutes alignées selon la surface cylindrique 42 et les secondes portions 38 de sommet selon la surface cylindrique 44. Préférentiellement, les extrémités axiales amont 32 et aval 34 de la tôle ondulée 28 forment des premières portions 36 de sommet s'étendant également selon la surface cylindrique 42.

Les premières portions 36 de sommet, respectivement les secondes portions 38 de sommet, définissent avec les portions 40 de liaison de sommets adjacentes une forme trapézoïdale dépourvue de sa plus grande base. La petite base est définie par une première portion 36 de sommet, respectivement une seconde portion 38 de sommet. Les deux côtés non-parallèles du trapèze sont définis par les portions 40 de liaison de sommet reliées de part et d'autre à la portion 36, 38 de sommet formant la petite base.

Chaque première portion 36 de sommet, et chaque seconde portion 38 de sommet et chaque portion 40 de liaison de sommets s'étend sur toute la largeur de la tôle ondulée 28, le long de la courbure du profil courbé, de manière à ce que la tôle ondulée 28 ait une forme sensiblement corruguée et que la direction des ondulations soit selon l'axe axial.

La tôle ondulée 28 est découpée de manière à présenter des fentes 46 s'étendant dans la direction axiale et débouchant dans une direction normale à la tôle ondulée. Les fentes 46 sont découpées dans la tôle ondulée 28 dans une direction sensiblement axiale au travers des premières portions 36 de sommet, des portions 40 de liaison de sommets adjacentes desdites premières portions 36 de sommet, d'une partie de l'extrémité aval 34 de la tôle ondulée 28 et de la portion 40 de liaison la reliant à une dite seconde portion 38 de sommet. Chacune desdites fentes 46 est destinée à recevoir une bande 48 découpée dans la deuxième paroi 22.

A noter que les découpes des fentes 46 peuvent être réalisées, soit avant frittage dans le cas de l'utilisation d'un polysiloxane, après polymérisation de celui-ci. La découpe des bandes 48 peut également être réalisée après polymérisation d'un polysiloxane ainsi que l'assemblage du tout. Dans ce cas, on procédera à la pyrolyse du système complet. On peut également envisager de faire le collage des deux peaux 14 au stade polymérisé et ainsi réaliser simultanément la pyrolyse du polysiloxane constitutifs des cloisons 16 acoustiques et le frittage de la matrice alumine des peaux 14.

Dans le cas de l'utilisation de premiers liants fugitifs, on préfèrera faire les opérations de découpe des fentes, découpe des bandes 48, montage du complexe, collage des peaux 14 à un stade où les éléments unitaires sont pré-frittés. On procédera, après montage totale du complexe au frittage finale afin d'assurer la cohésion structurale de l'ensemble.

Les bandes 48, une fois insérées, s'étendent ainsi dans une direction normale vis-à-vis de la tôle ondulée 28 et cloisonnent dans le sens de la largeur, le long de la courbure, les premières et secondes portions 36, 38 de sommet.

La deuxième paroi 22 est découpée de manière à former des bandes 48 sensiblement identiques ayant une largeur d'environ 10mm. Cette découpe peut être mécanique, par jet d'eau ou bien laser. Chaque bande 48 comprend un premier bord 50 rectiligne s'étendant sensiblement axialement, de l'extrémité amont 32 à l'extrémité aval 34 de la tôle ondulée 28 de manière à être en saillie dans une direction normale à la tôle ondulée 28 par rapport aux premières portions 36 de sommets, ainsi que les extrémités amont 32 et aval 34 de à la tôle ondulée 28, lorsque les bandes sont insérées. Lorsque le panneau acoustique 10 est monté sur le carter de la turbomachine, la direction de la saillie correspond à la direction radiale, et plus précisément radialement vers l'intérieur. Le second bord 52 de chacune desdites bandes 48 s'étend en vis-à-vis du premier bord 50 et épouse la forme de l'extrémité amont 32 et de la portion 40 de liaison de sommets reliant l'extrémité amont 32 de la tôle ondulée 28 et une seconde portion 38 de sommet. A partir de l'extrémité aval 54 de ladite portion 40 de liaison de sommets mentionnée précédemment, le second bord 52, de la bande 48, s'étend axialement, parallèlement au premier bord 50, de manière à épouser la forme des secondes portions 38 de sommet et être en butée avec ces dernières, lorsque les bandes 48 sont insérées. A partir de l'extrémité aval 56 de la seconde portion 38 de sommet reliée à l'extrémité aval 34 de la tôle ondulée 28 par une portion 40 de liaison de sommets, le second bord 52 de la bande 48 s'étend vers l'aval selon une direction axiale et vers le premier bord 50. Lorsque l'espacement entre le premier et le second bord 50, 52 est identique à celui au niveau de l'extrémité amont 34, le premier bord 50 et le second bord 52 s'étendent parallèlement selon une direction axiale, de manière à ce que le second bord 52 épouse la forme de la partie aval 36 de la tôle ondulée 28.

La figure 2b représente la troisième paroi 24 formant la peau extérieure, autrement appelée première peau 14 ayant subi un formage de manière à être galbée. La première peau 14 galbée comprend également un profil courbé dans le sens de sa largeur, de manière à épouser le profil courbé de la tôle ondulée 28. La première peau 14 galbée s'étend sur la même distance axiale que la tôle ondulée 28. Axialement, la première peau 14 est formée de manière à épouser les formes de la tôle ondulée 28 sur les portions comprenant l'extrémité amont 34 ainsi que les secondes portions 38 de sommet de la tôle ondulée 28. A partir de l'extrémité aval 56 de la seconde portion 38 de sommet reliée à l'extrémité aval 34 de la tôle ondulée 28 par une portion 40 de liaison de sommets, la première peau 14 galbée est formée de manière à épouser les formes des seconds bords 52 des bandes 48 insérées dans la tôle ondulée 28.

La figure 2c représente l'âme alvéolaire 12 constituée par de la tôle ondulée 28 et de bandes 48 insérées dans les fentes 46 de la tôle ondulée 28. Chaque alvéole 18 de l'âme alvéolaire 12 définie par une première portion 36 de sommet débouche radialement vers l'extérieur, lorsque le panneau acoustique 10 est monté dans la turbomachine. Respectivement, chaque alvéole 18 de l'âme alvéolaire 12 définie par une seconde portion 38 de sommet débouche radialement vers l'intérieur, lorsque le panneau acoustique 10 est monté dans la turbomachine.

Lorsque les bandes 48 formant des cloisons 16 sont insérées dans les fentes 48 de la tôle ondulée 28, il est préférable d'appliquer un adhésif au niveau des zones de jonction de la tôle ondulées 28 et des bandes 48. Ces zones de jonction sont définies par les extrémités des fentes 46. L'application de l'adhésif au niveau des zones de jonction permet de rigidifier l'âme alvéolaire 12.

Optionnellement, l'adhésif peut être appliqué au niveau des extrémités des fentes 46 destinées à venir en contact avec les bandes 48, avant que celles-ci soient introduites.

Lorsque l'âme alvéolaire 12 est constituée et rigidifiée, la troisième 24 paroi et la quatrième paroi (non représentée), formant les peaux extérieure et intérieure 14, autrement appelée première peau et seconde peau du panneau acoustique 10, sont fixées, dans une direction normale par rapport à la tôle ondulée 28, de part et d'autre de l'âme alvéolaire 12, de manière à enfermer les alvéoles 18.

La seconde peau (non représentée), obtenue à partir de la quatrième paroi 26, vient recouvrir le côté de l'âme alvéolaire 12 en vis-à-vis de celui recouvert par la première peau, obtenue à l'aide la troisième paroi 24. La seconde peau s'étend circonférentiellement sur toute la circonférence du panneau acoustique 10 et longitudinalement de l'extrémité amont à l'extrémité aval de la première peau. La seconde peau est conformée de manière à être collée à l'âme alvéolaire 12 et à la première peau agencée radialement à l'extérieur de l'âme alvéolaire 12 en amont et en aval de l'âme alvéolaire 12.

Pour assurer, la fixation des peaux 14 sur l'âme alvéolaire 12, un adhésif est appliqué sur la surface 58 de la peau 14 venant au contact des premières et secondes portions 36, 38 de sommet de l'âme alvéolaire 12. De manière alternative, ou additionnelle, l'adhésif est appliqué sur la surface 60 de l'extrémité amont 34 de la tôle ondulée 28, les surfaces 62 des secondes portions 38 de sommet et les seconds bords 52 des bandes 48, au niveau de l'extrémité aval 36 de la tôle ondulée 28. Les surfaces 60, 62 de l'extrémité amont 32 et des secondes portions 38 de sommet et les second bords 52 des bandes 48 sont en vis-à-vis de la peau 14 formée par la troisième paroi 24. L'adhésif utilisé est préférentiellement de la résine précéramique oxyde ou de la colle céramique, tel que décrit précédemment.

Lorsque les peaux 14 sont fixées, le panneau acoustique 10 selon le premier mode de réalisation est obtenu.

Préférentiellement, lorsque la tôle ondulée 28, les bandes 48 formant les cloisons 16 des alvéoles 18 de l'âme alvéolaire 12, les peaux 14 sont respectivement obtenues, un déliantage et un pré-frittage peuvent être réalisés.

Le déliantage est réalisé pour éliminer la barbotine des pièces mentionnées précédemment obtenues à l'aide des première, deuxième, troisième et quatrième parois 20, 22, 24, 26. Cette barbotine est éliminée pendant la montée en température dans le cycle de pré-frittage.

Le pré-frittage est réalisé à une température d'environ entre 1000 et 1100°C pour consolider le matériau. A cette température, les grains de poudre d'alumine créent des pontages entre eux conférant la tenue au matériau.

Optionnellement, ces étapes de déliantage et pré-frittage peuvent être réalisées également après l'assemblage des bandes 48 dans les fentes 46 de la tôle ondulée 28 ou après le collage des peaux 14 sur l'âme alvéolaire 12.

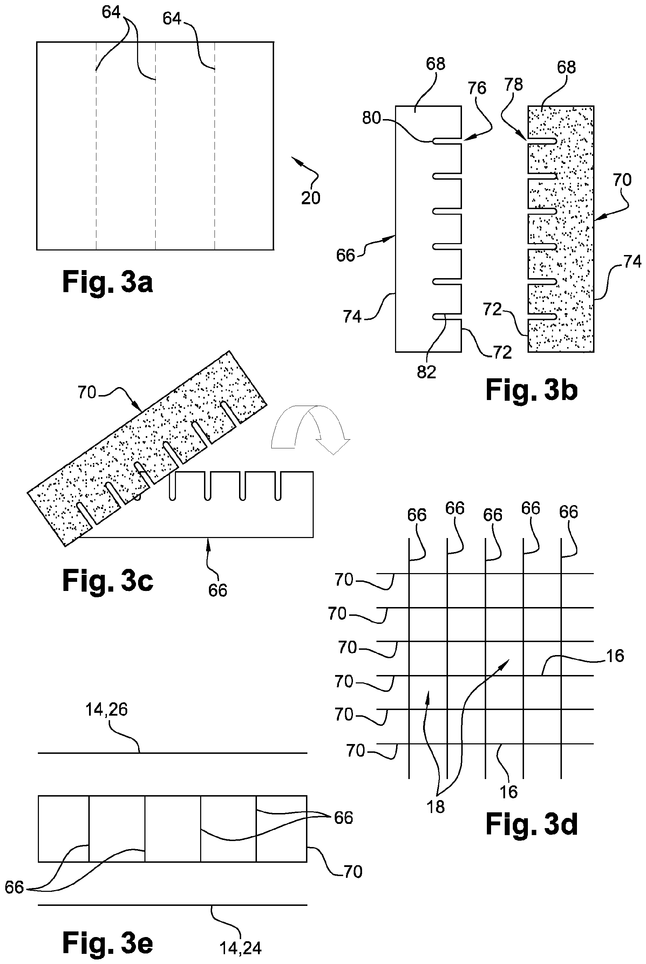

Les figures 3a à 3e, représentent un mode alternatif de réalisation d'un panneau acoustique décrit dans la présente divulgation, non compris dans la portée des revendications.

Comme dans le mode de réalisation selon l'invention, les première, deuxième, troisième et quatrième parois 20, 22, 24, 26, composites sont obtenues respectivement à partir d'une nappe de fibres biaxiales ou d'une nappe de fibres unidirectionnelles.

La figure 3a représente la première paroi 20 composite obtenue à la suite de l'enduction et du passage sous presse ou bâche à vide. Il est illustré, sous la forme de lignes en pointillés parallèles, des zones de découpes 64 de la première paroi 20, de manière à former des premières bandes 66. Cette découpe peut être mécanique, par jet d'eau, ou laser. Les premières bandes 66 ont une forme sensiblement rectangulaire. La largeur 68 de chaque première bande 66 est de l'ordre de 10mm.

La deuxième paroi 22 est obtenue par le même procédé que la première paroi 20 et est également découpée sous la forme de secondes bandes 70 ayant les mêmes caractéristiques que les premières bandes 66.

Optionnellement, les premières et les secondes bandes 66, 70 peuvent être obtenues à partir de la première paroi 20 et/ou de la deuxième paroi 22.

Les premières et secondes bandes 66, 70 comprennent chacune un premier bord 72 et un second bord 74 parallèles définissant la longueur desdites premières et secondes bandes 66, 70. Le premier et le second bords 72, 74 des premières et secondes bandes 66, 70 sont espacés l'un de l'autre de manière à définir la largeur 68 desdites premières et secondes bandes 66, 70.

Il est illustré en figure 3b une découpe de premières fentes 76 dans les premières bandes 66 et respectivement de secondes fentes 78 dans les secondes bandes 70. Les premières et secondes fentes 76, 78 s'étendent respectivement dans une direction parallèle à la largeur 68 desdites premières et secondes bandes 66, 70 à partir de leur premier bord 72 respectif. Les premières et secondes fentes 76, 78 comprennent chacune un fond 80 et deux flancs 82 s'étendant parallèlement de part et d'autre dudit fond 80. Chacune desdites premières et secondes fentes 76, 78 s'étend respectivement sur la moitié de la largeur 68 desdites premières et secondes bandes 66, 70. Les premières et secondes bandes 66, 70 pourvues respectivement de premières et de secondes fentes 76, 78 forment chacune un peigne. Les premières fentes 76 des premières bandes 66 sont espacées à égale distance les unes des autres. Les secondes fentes 78 des secondes bandes 70 sont également espacées à égale distance les unes des autres.

La figure 3c illustre un emboîtement des premières bandes 66 dans les secondes fentes 78 des secondes bandes 70 et un emboîtement des secondes bandes 70 dans les premières fentes 76 des premières bandes 66, de manières à ce que le fond 80 des premières fentes 76 soit en contact avec le fond 80 des secondes fentes 78.

Les premières fentes 76 des premières bandes 66 étant espacées à égales distances les unes des autres, et de même pour les secondes fentes 78 des secondes bandes 70. Toutes les premières bandes 66 sont sensiblement identiques et toutes les secondes bandes 70 sont sensiblement identiques. Lorsque les premières bandes 66 sont emboîtées dans les secondes fentes 78 des secondes bandes 70, lesdites première bandes 66 s'étendent parallèlement les unes par rapport aux autres. De la même manière, lorsque les secondes bandes 70 sont emboîtées dans les premières fentes 76 des premières bandes 66, lesdites secondes bandes 70 s'étendent parallèlement les unes par rapport aux autres. Les secondes bandes 70 s'étendent perpendiculairement aux premières bandes 66.

Ces emboîtements des premières et secondes bandes 66, 70 permettent ainsi de réaliser l'âme alvéolaire 12 (illustrée en figure 3d). Les alvéoles 18, de l'âme alvéolaire 12, sont définies par les intersections des premières bandes 66 et des secondes bandes 70. Ainsi, une alvéole 18 est définie par l'intersection de deux premières bandes 66 successives avec deux secondes bandes 70 successives. Le parallélisme des premières bandes 66 et respectivement des secondes bandes 70 ainsi que la perpendicularité des premières et secondes bandes 66, 70 permettent de définir des alvéoles 18 ayant une forme rectangulaire, et préférentiellement carrée. Les alvéoles 18 comprennent des extrémités débouchantes au niveau des affleurements des premières et secondes bandes 66, 70 définissant l'alvéole 18.

Avantageusement, lorsque l'âme alvéolaire 12 est obtenue par emboîtement des premières bandes 66 et seconde bandes 70, un adhésif es appliqué au niveau des zones de jonctions desdites première et secondes bandes 66, 70, afin de rigidifier l'âme alvéolaire 12 et d'éviter une dissociation des premières bandes 66 et secondes bandes 70 constituant l'âme alvéolaire 12.

Optionnellement, avant l'emboitement des premières et des secondes bandes 66, 70, de l'adhésif peut être appliqué au niveau du fond 80 et des flancs 82 de chacune des premières et secondes fentes 66, 70.

Lorsque l'âme alvéolaire 12 est réalisée et rigidifiée, un déliantage et un pré-frittage est réalisées sur les pièces obtenues à l'aide des première, deuxième, troisième et quatrième parois 20, 22, 24, 26. Le procédé est identique à celui décrit dans le premier mode de réalisation de l'invention.

Lorsque le déliantage et le pré-frittage ont été réalisé, la troisième paroi 24 et la quatrième paroi 26, formant les peaux 14, sont positionnées de part et d'autre de l'âme alvéolaire 12 de manière recouvrir les extrémité débouchantes des alvéoles 18, comme illustré en figure 3e. La troisième paroi 24 et la quatrième paroi 26 formant les peaux 14 sont fixées à l'âme alvéolaire 12 à l'aide d'un adhésif. Préférentiellement, l'adhésif est de la colle céramique oxyde. La colle céramique oxyde est appliquée au niveau de la surface de la troisième paroi 24 et de la surface de la quatrième paroi 26 venant en contact avec l'âme alvéolaire 12 et/ou au niveau des extrémités débouchantes des alvéoles 18 destinées à venir en contact avec lesdites troisième et quatrième parois 24, 26.

L'assemblage des peaux 14 avec l'âme alvéolaire 12 permet de réaliser un panneau acoustique 10 selon le deuxième mode de réalisation.

Le panneau acoustique 10, selon l'invention et selon le mode de réalisation alternatif décrit ci-dessus et non compris dans la portée des revendications, se présente sous la forme d'un secteur annulaire. Plusieurs panneaux acoustiques 10 peuvent être agencés circonférentiellement bout à bout de manière à former un anneau de panneaux acoustiques 10.

## Revendications

1. Procédé de fabrication d'un panneau composite, en particulier dans une turbomachine, comprenant les étapes suivantes :
a) réaliser une première paroi (20), une deuxième paroi (22), une troisième paroi (24) et une quatrième paroi (26) en matériaux composites comprenant une matrice oxyde et des fibres longues oxydes,
b) à partir des première et deuxième parois (20, 22), réaliser une âme alvéolaire (12) comportant une pluralité d'alvéoles (18), chaque alvéole (18) comprenant une première extrémité et une seconde extrémité opposée,
c) recouvrir lesdites premières et secondes extrémités des alvéoles (18) de ladite âme alvéolaire (12) avec ladite troisième paroi (24) et ladite quatrième paroi (26), respectivement, de manière à fermer les extrémités desdites alvéoles (18).
le procédé comprenant l'étape suivante:
i. réaliser un formage de la première paroi de manière à obtenir une paroi ondulée (28) présentant une alternance de premières et de secondes portions (36, 38) de sommet reliées entre elles par des portions (40) de liaison de sommets, et
étant **caractérisé en ce qu'**il comprend les étapes suivantes:
ii. découper des fentes dans lesdites premières portions (36) de sommet et dans lesdites portions (40) de liaison de sommets de la première paroi (20),
iii. réaliser des découpes dans la deuxième paroi (22) de manière à obtenir une pluralité de bandes (48),
iv. insérer lesdites bandes (48) dans les fentes (46) de la première paroi (20) de manière à délimiter une pluralité d'alvéoles (18).

2. Procédé selon la revendication 1, **caractérisé en ce qu'**il comprend une étape consistant à appliquer un adhésif, préférentiellement de la colle céramique, au niveau des zones de jonction de la première paroi (20) et des bandes (48).

3. Procédé selon la revendication 1 ou 2, **caractérisé en ce qu'**il comprend une étape consistant à appliquer un adhésif, préférentiellement de la colle céramique, au niveau des zones de jonctions de l'âme alvéolaire (12) avec au moins l'une de la troisième paroi (24) et de la quatrième paroi (26).

4. Procédé selon l'une des revendications 1 à 3, **caractérisé en ce que** le matériau composite est obtenu par ajout d'une barbotine de liaison à des nappes de fibres biaxiales ou unidirectionnelles.

5. Procédé selon l'une des revendications 1 à 4, **caractérisé en ce que** ladite au moins une parmi la première paroi (20), la deuxième paroi (22), la troisième paroi (24) et la quatrième paroi (26) est obtenue par thermoformage.

6. Procédé selon l'une des revendications 1 à 5, **caractérisé en ce que** au moins l'une de la première paroi (20), la deuxième paroi (22), la troisième paroi (24) et la quatrième paroi (26) est obtenue par formage à l'aide d'une empreinte.

7. Procédé selon l'une des revendications 1 à 6, **caractérisé en ce que** le procédé comprend au moins une étape de déliantage suivie d'une étape de frittage, lesdites étapes de déliantage et de frittage pouvant avoir lieu après l'une au moins des étapes suivantes :
- l'obtention de l'une des première, deuxième, troisième ou quatrième parois (20, 22, 24, 26),
- la découpe de bandes (48, 66, 70),
- l'assemblage des bandes (48, 66, 70) dans desdites fentes (46, 76, 78), et
- le collage de la troisième paroi (24) et de la quatrième paroi (26) sur l'âme alvéolaire (12).

8. Procédé l'une des revendications 1 à 7, **caractérisé en ce qu'**au moins l'une de la troisième paroi (24) et la quatrième paroi (26) comprend des perforations, chacune des perforations débouchant dans une alvéole (18).

## Patentansprüche

1. Verfahren zur Herstellung einer Verbundplatte, insbesondere für eine Turbomaschine bzw. ein Turbotriebwerk, umfassend die folgenden Schritte:
a) Herstellen einer ersten Wand (20), einer zweiten Wand (22), einer dritten Wand (24) und einer vierten Wand (26) aus Verbundmaterialien, die eine Oxidmatrix und oxidische Langfasern umfassen,
b) Herstellen eines Wabenkern (12) aus der ersten und der zweiten Wand (20, 22), der eine Vielzahl von Zellen (18) aufweist, wobei jede Zelle (18) ein erstes Ende und ein gegenüberliegendes zweites Ende umfasst,
c) Bedecken der ersten und zweiten Enden der Zellen (18) des Wabenkerns (12) mit der dritten Wand (24) bzw. der vierten Wand (26), um die Enden der Zellen (18) zu verschließen, wobei das Verfahren den folgenden Schritt umfasst:
- i. Formen der ersten Wand, um eine gewellte Wand (28) zu erhalten, die abwechselnd erste und zweite Scheitelabschnitte (36, 38) aufweist, die durch Scheitelverbindungsabschnitte (40) miteinander verbunden sind,
**dadurch gekennzeichnet, dass** es die folgenden Schritte umfasst:
- ii. Schneiden von Schlitzen in die ersten Scheitelabschnitte (36) und die Scheitelverbindungsabschnitte (40) der ersten Wand (20),
- iii. Bilden von Einschnitten in der zweiten Wand (22), um eine Vielzahl von Streifen (48) zu erhalten,
- iv. Einsetzen der Streifen (48) in die Schlitze (46) der ersten Wand (20), um eine Vielzahl von Zellen (18) abzugrenzen.

2. Verfahren nach Anspruch 1,
**dadurch gekennzeichnet, dass** es einen Schritt des Aufbringens von Klebstoff, vorzugsweise keramischem Klebstoff, auf die Verbindungsbereiche der ersten Wand (20) und der Streifen (48) umfasst.

3. Verfahren nach Anspruch 1 oder 2,
**dadurch gekennzeichnet, dass** es einen Schritt des Aufbringens von Klebstoff, vorzugsweise keramischem Klebstoff, auf die Verbindungsbereiche des Wabenkerns (12) mit zumindest einer aus dritter Wand (24) und vierter Wand (26) umfasst.

4. Verfahren nach einem der Ansprüche 1 bis 3,
**dadurch gekennzeichnet, dass** das Verbundmaterial durch Zugabe eines Bindeschlickers zu biaxialen oder unidirektionalen Fasermatten erhalten wird.

5. Verfahren nach einem der Ansprüche 1 bis 4,
**dadurch gekennzeichnet, dass** zumindest eine aus erster Wand (20), zweiter Wand (22), dritter Wand (24) und vierter Wand (26) durch Thermoformen erhalten wird.

6. Verfahren nach einem der Ansprüche 1 bis 5,
**dadurch gekennzeichnet, dass** zumindest eine aus erster Wand (20), zweiter Wand (22), dritter Wand (24) und vierter Wand (26) durch Formen mit Hilfe eines Abdrucks erhalten wird.

7. Verfahren nach einem der Ansprüche 1 bis 6,
**dadurch gekennzeichnet, dass** das Verfahren zumindest einen Schritt des Entbinderns gefolgt von einem Schritt des Sinterns umfasst, wobei die Schritte des Entbinderns und des Sinterns nach zumindest einem der folgenden Schritte erfolgen können:
- Erhalten einer aus erster, zweiter, dritter oder vierter Wand (20, 22, 24, 26),
- Ausschneiden von Streifen (48, 66, 70),
- Montieren der Streifen (48, 66, 70) in den Schlitzen (46, 76, 78), und
- Ankleben der dritten Wand (24) und der vierten Wand (26) an den Wabenkern (12).

8. Verfahren nach einem der Ansprüche 1 bis 7,
**dadurch gekennzeichnet, dass** zumindest eine aus dritter Wand (24) und vierter Wand (26) Perforationen umfasst, wobei jede der Perforationen in eine Wabe (18) mündet.

## Claims

1. Process for manufacturing a composite panel, in particular in a turbomachine, comprising the following steps:
a) making a first wall (20), a second wall (22), a third wall (24) and a fourth wall (26) of composite materials comprising an oxide matrix and long oxide fibres,
b) from the first and second walls (20, 22), forming a honeycomb core (12) having a plurality of cells (18), each cell (18) having a first end and an opposite second end,
c)covering said first and second ends of the cells (18) of said honeycomb core (12) with said third wall (24) and said fourth wall (26), respectively, so as to close the ends of said cells (18),
the method comprising the following step:
i. forming the first wall so as to obtain a corrugated wall (28) having alternating first and second apex portions (36, 38) interconnected by apex connecting portions (40), and being **characterised in that** it comprises the following steps:
ii. cutting slots in said first apex portions (36) and in said apex connecting portions (40) of the first wall (20),
iii. making cuts in the second wall (22) so as to obtain a plurality of strips (48),
iv. inserting said strips (48) into the slots (46) of the first wall (20) so as to delimit a plurality of cells (18).

2. The method according to claim 1, **characterised in that** it comprises a step consisting of applying an adhesive, preferably ceramic glue, to the junction areas of the first wall (20) and the strips (48).

3. The method according to claim 1 or 2, **characterised in that** it comprises a step of applying an adhesive, preferably ceramic glue, to the areas of junctions of the honeycomb core (12) with at least one of the third wall (24) and the fourth wall (26).

4. The method according to one of claims 1 to 3, **characterised in that** the composite material is obtained by adding a binding slurry to biaxial or unidirectional fibre webs.

5. The method according to one of claims 1 to 4, **characterised in that** said at least one of the first wall (20), the second wall (22), the third wall (24) and the fourth wall (26) is obtained by thermoforming.

6. The method according to one of claims 1 to 5, **characterised in that** at least one of the first wall (20), the second wall (22), the third wall (24) and the fourth wall (26) is obtained by forming with the aid of an impression.

7. The method according to one of claims 1 to 6, **characterised in that** the method comprises at least one debonding step followed by a sintering step, said debonding and sintering steps being able to take place after at least one of the following steps:
- obtaining one of the first, second, third or fourth walls (20, 22, 24, 26),
- cutting of strips (48, 66, 70),
- assembling the strips (48, 66, 70) in said slots (46, 76, 78), and
- gluing the third wall (24) and the fourth wall (26) to the honeycomb core (12).

8. The method of one of claims 1 to 6, **characterised in that** at least one of the third wall (24) and the fourth wall (26) comprises perforations, each of the perforations opening into a cell (18).
